(19) Europäisches Patentamt

European Patent Office

Office européen des brevets

(11) **EP 1 167 370 B1**

(12) **EUROPÄISCHE PATENTSCHRIFT**

(45) Veröffentlichungstag und Bekanntmachung des Hinweises auf die Patenterteilung:
**28.12.2005 Patentblatt 2005/52**

(51) Int Cl.$^7$: **C07F 1/02**, C07B 37/00

(21) Anmeldenummer: **01114098.5**

(22) Anmeldetag: **09.06.2001**

(54) **Ethyllithium in Dibutylether**

Ethyl lithium in dibutylether

Ethyllithium dans de l'ether dibutilique

(84) Benannte Vertragsstaaten:
**DE FR GB NL**

(30) Priorität: **28.06.2000 DE 10030535**

(43) Veröffentlichungstag der Anmeldung:
**02.01.2002 Patentblatt 2002/01**

(73) Patentinhaber: **Chemetall GmbH**
**60487 Frankfurt (DE)**

(72) Erfinder:
• **Weiss, Wilfried, Dr.**
**61440 Oberursel (DE)**

• **Aul, Rainer, Dr.**
**63110 Rodgau (DE)**
• **Emmel, Ute**
**65929 Frankfurt am Main (DE)**
• **Rittmeyer, Peter, Dr.**
**65843 Sulzbach/Taunus (DE)**

(74) Vertreter: **Scherzberg, Andreas Hans et al**
**Patente, Marken & Lizenzen**
**c/o Chemetall GmbH**
**Trakehner Strasse 3**
**60487 Frankfurt am Main (DE)**

(56) Entgegenhaltungen:
**EP-A- 0 340 819**      **EP-A- 0 597 520**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Lösung von Ethyllithium in Dibutylether.

Ethyllithium (EtLi) gehört in die Reihe der Lithiumalkyle. Diese finden Verwendung als Starter in der anionischen Polymerisation und in der präparativen organischen Synthese. Dort werden sie als Alkylierungsmittel eingesetzt oder dienen aufgrund ihrer stark basischen Eigenschaften der Erzeugung von Carbanionen, die mit einer Vielzahl von Elektrophilen umgesetzt werden können. (Houben-Weyl, Methoden der Organischen Chemie, Thieme Verlag, Band XIII/1, 1970; Wakefield, B.J., The Chemistry of Organilithium Com-pounds, Pergamon Press, London, 1974; Organolithium Methods, Academic Press, London, 1988; Brandsma, L. Preparative Polar Organometallic Chemistry, Vol 1, 1987, und Vol. 2, 1990, Springer-Verlag; M. Schlosser et al, Organometallics in Synthesis,1994, John Wiley & Sons, Sussex)

Die Herstellung der Lithiumalkyle gemäß

$$2\ Li + R\text{-}Hal \rightarrow R\text{-}Li + Li\text{-}Hal$$

geht auf K. Ziegler zurück. (K. Ziegler, H.Colonius, Liebigs Ann. Chem. 476, 135 *,1930*) Die Synthese kann sowohl in Kohlenwasserstoffen (Gilman, H. et al., JACS, 63, 2479, *1941*) als auch in Ethem (Gilman, H., JACS, 71, 1499, *1949*) erfolgen.

Die Verwendung von Ethem als Lösungsmittel ist dabei stark eingeschränkt, da außer im Falle des Methyllithiums in Diethylether ein Angriff des Lithiumalkyls auf den Ether erfolgt, was zur Zersetzung des Lithiumalkyls unter Etherspaltung führt (A. Maercker, Ang.Chem. 99, 1002, *1987*). Für das Ethyllithium in Diethylether wurde dabei bei 25 °C eine Halbwertzeit von 54 Stunden, bzw. bei 35 °C eine Halbwertzeit von 17 Stunden gefunden (T.L.Brown et al JACS, 88, 2174, *1966*). Im Falle des Ethyllithiums in Tetrahydrofuran (THF) findet die Zersetzung des THF durch Ethyllithium unter Bildung von Ethen und Li-ethenolat bereits bei -20 °C statt (A. Rembaum et al., J. Polym.Sci. 56, S17, *1962*).

Bei Bedarf werden etherische Lösungen von Ethyllithium in situ erzeugt, eine kommerzielle Herstellung und Bereitstellung solcher Lösungen ist bislang nicht möglich.

Die Verwendungsmöglichkeit von Kohlenwasserstoffen als Lösungsmittel für Ethyllithium ist bisher stark eingeschränkt, da die Löslichkeit von Ethyllithium aufgrund des kleinen Alkylrestes nur gering ist (Löslichkeit in Hexan: 2 %, in Toluol: 4 %, in Benzol 5 %) und derart verdünnte Lösungen unwirtschaftlich sind. Weiterhin hat eine Lösung von Ethyllithium in Toluol den Nachteil, dass das Toluol durch Ethyllithium metalliert wird. Benzol ist als Lösungsmittel aufgrund seiner karzinogenen Eigenschaften kaum geeignet.

Um höher konzentrierte Ethyllithium-Lösungen herzustellen, wurde versucht, EtLi durch Komplexierung mit anderen Li-Alkylen in Lösung zu bringen. (Weiner, West, JACS, 85, 4856, *1963*) Von Nachteil derartiger Lösungen sind uneinheitliche Alkylgruppen, was solche Lösungen für die Einführung der Ethylgruppe ungeeignet macht. Auch wurde versucht, EtLi mit Li-ethoxid zu komplexieren und so zu stabilisieren. (Brown, T.L., JACS, 88, 2174, *1966*) Hierbei ist die veränderte Reaktivität des EtLi von Nachteil.

Aufgabe der vorliegenden Erfindung ist es, die Nachteile des Standes Technik zu beseitigen und insbesondere eine relativ stabile Ethyllithiumlösung ohne andere Alkylreste mit einer EtLi-Konzentration bis zu 15 % (%-Angaben sind, wenn nicht anders vermerkt, Gewichts-%) bereitzustellen. Aufgabe ist es weiterhin, ein Verfahren zu Herstellung einer solchen EtLi-Lösung zu schaffen.

Gelöst wird die Aufgabe durch eine EtLi-Lösung in Dibutylether und durch ein Verfahren zur Herstellung einer solchen Lösung, bei dem Lithium in Dibutylether mit Ethylchlorid zu Ethyllithium reagiert.

Es wurde überraschend gefunden, dass die erfindungsgemäße EtLi-Lösung relativ stabil ist (siehe Tabelle 1).

Tabelle 1:

| Zersetzungsraten von EtLi-Lösung in Dibutylether und zum Vergleich von EtLi-Lösung in Diethylether bei verschiedenen Temperaturen. (Die Aktivbase wurde nach der Methode der Gilman'schen Doppeltitration ermittelt (H.Gilman, A.H.Haubein, JACS, 66, 1515, *1944*).) | | |
|---|---|---|
| Temperatur (°C) | Zersetzung in Mol-% pro Tag | |
| | EtLi in Dibutylether | EtLi in Diethylether |
| 0 | 0,08 | |
| 20 | 0,21 | |
| 25 | | 30 |

Tabelle 1:   (fortgesetzt)

| Zersetzungsraten von EtLi-Lösung in Dibutylether und zum Vergleich von EtLi-Lösung in Diethylether bei verschiedenen Temperaturen. (Die Aktivbase wurde nach der Methode der Gilman'schen Doppeltitration ermittelt (H.Gilman, A.H.Haubein, JACS, 66, 1515, *1944*).) | | |
|---|---|---|
| Temperatur (°C) | Zersetzung in Mol-% pro Tag | |
| | EtLi in Dibutylether | EtLi in Diethylether |
| 35 | | 98 |
| 40 | 2,98 | |
| 50 | 21,5 | |
| 60 | 31 | |
| 70 | 86 | |

Für den Verlust an Aktivbase wird eine Reaktion 1. Ordnung angenommen, für diese gilt: k = ln [Endkonzentration$_{(Aktivbase)}$/Anfangskonzentration$_{(Aktivbase)}$] x 100/Lagerzeit in Tagen.

Die Herstellung der Lösung von Ethyllithium in Dibutylether erfolgt nach der Ziegler'schen Methode. Dabei wird das Lithium z.B. als Dispersion in Dibutylether vorgelegt und durch Einleiten von gasförmigem Ethylchlorid zur Reaktion gebracht. Bei ca. 90 %-iger Umsetzung wird nach Filtration eine Lösung mit einem Gehalt von bis zu 12 % Ethyllithium erhalten. Die Syntheselösung mit einem maximalen Gehalt von 12 % Ethyllithium kann durch Einengen im Vakuum bei Raumtemperatur auf 15 % aufkonzentriert werden.

Wegen des pyrophoren Verhaltens dieser hochkonzentrierten Lösungen ist es empfehlenswert, kommerzielle Lösungen auf einen Ethyllithiumgehalt von 7 bis 8 % einzustellen. Dies kann durch eine direkte Synthese einer 7 bis 8 %-igen Lösung oder durch Verdünnen einer höher konzentrierten Lösung auf 7 bis 8 % erfolgen. Als Verdünner können Dibutylether oder auch Kohlenwasserstoffe (cyclische oder acyclische) mit 5 bis 12 C-Atomen oder aromatische Kohlenwasserstoffe mit 6 bis 12 C-Atomen eingesetzt werden. Diese Lösungen sind dann nicht mehr pyrophor. Lösungen von Ethyllithium in Dibutylether und einem oder mehreren Kohlenwasserstoffen enthalten bevorzugt 5 bis 8 % Ethyllithium.

Vorzugsweise wird Lithium als Granulat (z.B. mit einer Teilchengröße bis zu 3 mm) und besonders bevorzugt in pulvriger Form (Teilchengröße 10 bis 500 μm, bevorzugt 10 bis 200 μm) eingesetzt, wobei üblicherweise ein Überschuß an Lithium eingesetzt wird. Pro Mol Ethylchlorid wird dabei eine stöchiometrische Menge von 2 Mol Li und zusätzlich ein Überschuss von 0,02 bis 0,5 Mol, bevorzugt 0,02 bis 0,3 Mol Lithium eingesetzt.

Die Ansatzkonzentration wird bevorzugt so gewählt, dass die Produktkonzentration in der fertigen Lösung ca. 8 % beträgt. Da die Reaktion von Lithium mit Ethylchlorid exotherm ist, wird während der Umsetzung bevorzugt gegengekühlt, um die Reaktionswärme abzufangen und Nebenreaktionen und Produktzersetzung zu vermeiden. Die maximale Reaktionstemperatur beträgt 40 °C. Bevorzugt ist eine Reaktionstemperatur von -10 bis +10 °C. Die Dosiergeschwindigkeit wird so gewählt, dass die Reaktionswärme gut abgefangen wird und überschüssiges Ethylchlorid nicht aus dem Reaktionsgemisch entweicht. Eine zu schnelle Dosierung des Ethylchlorids ist wegen dessen Löslichkeit in Dibutylether und einer möglichen Wurtzrektion zu vermeiden. Das bei der Reaktion entstandene Lithiumchlorid wird nach Reaktionsende abfiltriert; die filtrierte Lösung ist die fertige Produktlösung oder kann bei Bedarf mit Dibutylether oder einem Kohlenwasserstoff auf die gewünschte Konzentration verdünnt werden.

Die bevorzugte Lagertemperatur der Lösung beträgt -20 bis +5 °C, besonders bevorzugt ist eine Lagertemperatur von 0 °C.

Der Gegenstand der Erfindung wird anhand der folgenden Beispiele näher erläutert:

**Beispiel 1: Herstellung einer 9,3 %-igen Ethyllithiumlösung in Dibutylether**

In einem Doppelmantelreaktor wurden 14 g (2 mol) Lithiumpulver (Teilchen-größe 10 bis 200 μm) in 300 g Dibutylether suspendiert und mittels Kühlöl auf 0 °C temperiert.

Aus einer Stahlflasche wurde das Ethylchlorid zudosiert. Das Anspringen der Reaktion war nach kurzer Zeit durch einen Anstieg der Temperatur zu erkennen. Die Dosiergeschwindigkeit wurde so eingestellt, dass die Reaktion möglichst gleichmäßig verlief und die entwickelte Wärme gut abgeführt werden konnte. Es wurden über 240 Minuten bei einer Reaktionstemperatur von ca. 0 °C ca. 0,85 Mol Ethylchlorid zudosiert. Anschließend wurde 90 Minuten bis zum vollständigen Abklingen der Reaktionswärme gewartet. Die Reaktion ließ sich leicht durch Probenahme und Alkalitätsbestimmung verfolgen.

Der Reaktionsansatz wurde filtriert und analysiert. Erhalten wurden 280 g einer klaren, farblosen Lösung mit einem Base-Gehalt von 2,58 mmol/g, was einer 9,3 %-igen Lösung und einer Ausbeute (bezogen auf Li) von 72 % entspricht.

Die Lösung erwies sich als pyrophor.

Durch Waschen des Li/LiCl-Filterschlammes erhöhte sich die Ausbeute auf 83 %, was eine Ausbeute bezogen auf Ethylchlorid von > 97 % bedeutet.

**Beispiel 2: Herstellung einer 12 %-igen Ethyllithiumlösung in Dibutylether**

In einem Doppelmantelreaktor wurden 23,9 g (3,44 mol) Lithiumpulver (Teilchengröße 10 bis 200 μm) in 300 g Dibutylether suspendiert und mittels Kühlöl auf 0 °C temperiert.

Aus einer Stahlflasche wurde das Ethylchlorid zudosiert. Das Anspringen der Reaktion war nach 15 Minuten durch einen Anstieg der Temperatur zu erkennen. Die Dosiergeschwindigkeit wurde so eingestellt, dass die Reaktion möglichst gleichmäßig verlief und die entwickelte Wärme gut abgeführt werden konnte. Es wurden über 200 Minuten bei einer Reaktionstemperatur von ca. 0 °C ca. 92 g (1,4 Mol) Ethylchlorid zudosiert. Anschließend wurde 120 Minuten bis zum vollständigen Abklingen der Reaktionswärme gewartet. Die Reaktion ließ sich leicht durch Probenahme und Alkalitätsbestimmung verfolgen.

Der Reaktionsansatz wurde filtriert und analysiert. Erhalten wurden 296,5 g einer klaren, gelben Lösung mit einem Base-Gehalt von 3,45 mmol/g, was einer 12,4 %-igen Lösung und einer Ausbeute (bezogen auf Li) von 60 % entspricht.

Die Lösung war bei Raumtemperatur von öliger Konsistenz und erwies sich als pyrophor.

Durch Waschen des Li/LiCl-Filterschlammes erhöhte sich die Ausbeute (bezogen auf Li) auf 70 %.

**Beispiel 3: Verdünnung einer 12,4 %-igen Lösung von Ethyllithium in Dibutylether mit Dibutylether**

200 g der 12,4 %-igen Lösung von Ethyllithium in Dibutylether aus Beispiel 2 wurden durch Zugabe von 110 g Dibutylether auf 8 % verdünnt. Diese Lösung war nicht pyrophor.

**Beispiel 4: Verdünnung einer 12,4 %-igen Lösung von Ethyllithium in Dibutylether mit Hexan**

200 g der 12,4 %-igen Lösung von Ethyllithium in Dibutylether aus Beispiel 2 wurden durch Zugabe von 110 g Hexan auf 8 % verdünnt. Diese Lösung war nicht pyrophor.

**Beispiel 5: Herstellung einer 14,7 %-igen Lösung von Ethyllithium in Dibutylether**

30 ml der 12,4 %-igen Lösung von Ethyllithium in Dibutylether aus Beispiel 2 wurden über 2 Tage im Ölpumpenvakuum bei Raumtemperatur eingeengt. Es verblieb eine klare Lösung mit einem Gehalt von 14,7 % EtLi.

**Patentansprüche**

1. Lösung von Ethyllithium in Dibutylether.

2. Lösung von Ethyllithium in Dibutylether mit einer Ethyllithium-Konzentration von 5 bis 15 Gew.-%.

3. Nicht pyrophore Lösung von Ethyllithium in Dibutylether mit einer Ethyllithium-Konzentration von 7 bis 8 Gew.-%.

4. Nicht pyrophore Lösung von Ethyllithium in einem Gemisch aus Dibutyl-ether und einem oder mehreren Kohlenwasserstoffen, wobei das Gewichtsverhältnis Dibutylether zu Kohlenwasserstoff 99 : 1 bis 25 : 75 beträgt und die Ethyllithium-Konzentration 2 bis 8 Gew.-% beträgt.

5. Lösung nach Anspruch 4, **dadurch gekennzeichnet, dass** die Ethyllithium-Konzentration 5 bis 8 Gew.-% beträgt.

6. Lösung nach Anspruch 4 oder 5, **dadurch gekennzeichnet, dass** als Kohlenwasserstoffe cyclische oder acyclische aliphatische Kohlenwasserstoffe mit 5 bis 12 C-Atomen oder aromatische Kohlenwasserstoffe mit 6 bis 12 C-Atomen eingesetzt werden.

7. Lösung nach Anspruch 6, **dadurch gekennzeichnet, dass** als Kohlenwasserstoffe eine oder mehrere der Verbindungen Pentan, Hexan, Heptan, Octan, Cyclohexan, Tetralin, Toluol, Xylol, Cumol oder Ethylbenzol eingesetzt werden.

8. Verfahren zur Herstellung einer Lösung von Ethyllithium in Dibutylether, **dadurch gekennzeichnet, dass** Lithium in Dibutylether vorgelegt und durch Einleiten von gasförmigem Ethylchlorid zur Reaktion gebracht wird und dass die erhaltene Lösung nach beendeter Reaktion filtriert wird.

9. Verfahren nach Anspruch 8, **dadurch gekennzeichnet, dass** Lithium in pulvriger Form mit einer TeilChengröße 10 bis 500 µm eingesetzt wird.

10. Verfahren nach Anspruch 8 oder 9, **dadurch gekennzeichnet, dass** die Reaktionstemperatur -50 bis +40 °C beträgt.

11. Verfahren nach Anspruch 10, **dadurch gekennzeichnet, dass** die Reaktionstemperatur-10 bis +10 °C beträgt.

12. Verfahren zur Herstellung einer Lösung von Ethyllithium in Dibutylether und einem oder mehreren Kohlenwasserstoffen, **dadurch gekennzeichnet, dass** eine nach einem Verfahren der Ansprüche 8 bis 11 hergestellte Lösung von Ethyllithium in Dibutylether mit einem oder mehreren Kohlenwasserstoffen versetzt wird.

13. Verwendung einer Ethyllithiumlösung nach den Ansprüchen 1 bis 7 in der präparativen organischen Synthese.


**Claims**

1. Solution of ethyllithium in dibutyl ether.

2. Solution of ethyllithium in dibutyl ether with an ethyllithium concentration of 5 to 15 wt.%.

3. Non-pyrophoric solution of ethyllithium in dibutyl ether with an ethyllithium concentration of 7 to 8 wt.%.

4. Non-pyrophoric solution of ethyllithium in a mixture of dibutyl ether and one or more hydrocarbons, in which the weight ratio of dibutyl ether to hydrocarbon is 99:1 to 25:75 and the ethyllithium concentration is 2 to 8 wt.%.

5. Solution according to claim 4, **characterised in that** the ethyllithium concentration is 5 to 8 wt.%.

6. Solution according to claim 4 or 5, **characterised in that** as hydrocarbons there are used cyclic or acyclic aliphatic hydrocarbons with 5 to 12 C atoms or aromatic hydrocarbons with 6 to 12 C atoms.

7. Solution according to claim 6, **characterised in that** as hydrocarbons there are used one or more of the compounds pentane, hexane, heptane, octane, cyclohexane, tetralin, toluene, xylene, cumene or ethylbenzene.

8. Process for the production of a solution of ethyllithium in dibutyl ether, **characterised in that** lithium is added to dibutyl ether and is reacted by introducing gaseous ethyl chloride and that the resultant solution is filtered after completion of the reaction.

9. Process according to claim 8, **characterised in that** lithium is used in pulverulent form in a particle size of 10 to 500 µm.

10. Process according to claim 8 or 9, **characterised in that** the reaction temperature is -50° to +40°C.

11. Process according to claim 8 or 9, **characterised in that** the reaction temperature is -10° to +10°C.

12. Process for the production of a solution of ethyllithium in dibutyl ether and one or more hydrocarbons, **characterised in that** one or more hydrocarbons is/are added to a solution of ethyllithium in dibutyl ether prepared according to a process of claims 8 to 11.

13. Use of an ethyllithium solution according to claims 1 to 7 in preparative organic syntheses.

EP 1 167 370 B1

**Revendications**

1. Solution d'éthyl-lithium dans de l'éther dibutylique.

2. Solution d'éthyl-lithium dans de l'éther dibutylique, dans laquelle la concentration d'éthyl-lithium vaut de 5 à 15 % en poids.

3. Solution non pyrophorique d'éthyl-lithium dans de l'éther dibutylique, dans laquelle la concentration d'éthyl-lithium vaut de 7 à 8 % en poids.

4. Solution non pyrophorique d'éthyl-lithium dans un mélange d'éther dibutylique et d'un ou plusieurs hydrocarbures, dans laquelle le rapport pondéral de l'éther dibutylique à l'hydrocarbure ou aux hydrocarbures vaut de 99/1 à 25/75 et la concentration d'éthyl-lithium vaut de 2 à 8 % en poids.

5. Solution conforme à la revendication 4, **caractérisée en ce que** la concentration d'éthyl-lithium vaut de 5 à 8 % en poids.

6. Solution conforme à la revendication 4 ou 5, **caractérisée en ce qu'**on emploie, en tant qu'hydrocarbures, des hydrocarbures aliphatiques cycliques ou acycliques en $C_{5-12}$ ou des hydrocarbures aromatiques en $C_{6-12}$.

7. Solution conforme à la revendication 6, **caractérisée en ce qu'**on emploie, en tant qu'hydrocarbures, un ou plusieurs des pentane, hexane, heptane, octane, cyclohexane, tétraline, toluène, xylène, cumène et éthyl-benzène.

8. Procédé de préparation d'une solution d'éthyl-lithium dans de l'éther dibutylique, **caractérisé en ce que** l'on met du lithium dans de l'éther dibutylique et on le fait réagir avec du chlorure d'éthyle à l'état gazeux que l'on y fait passer, et **en ce que**, une fois cette réaction terminée, on filtre la solution obtenue.

9. Procédé conforme à la revendication 8, **caractérisé en ce que** l'on emploie du lithium en poudre, en particules de 10 à 500 μm de taille.

10. Procédé conforme à la revendication 8 ou 9, **caractérisé en ce que** la réaction est effectuée à une température de -50 à +40 °C.

11. Procédé conforme à la revendication 10, **caractérisé en ce que** la réaction est effectuée à une température de -10 à +10 °C.

12. Procédé de préparation d'une solution d'éthyl-lithium dans de l'éther dibutylique et un ou plusieurs hydrocarbures, **caractérisé en ce que** l'on ajoute un ou plusieurs hydrocarbures à une solution d'éthyl-lithium dans de l'éther dibutylique, préparée selon un procédé conforme à l'une des revendications 8 à 11.

13. Utilisation d'une solution d'éthyl-lithium conforme à l'une des revendications 1 à 7 en synthèse organique préparative.